# EUROPÄISCHE PATENTSCHRIFT

(11) **EP 0 659 649 B1**
(45) Veröffentlichungstag und Bekanntmachung des Hinweises auf die Patenterteilung: **06.10.1999**
(21) Anmeldenummer: 94119550.5
(22) Anmeldetag: 09.12.1994
(51) Int. Cl.: B65D 6/16

(54) **Verpackungsbehältnis, insbesondere für Schuhe**
Packaging particularly for shoes
Boîte, en particulier pour chaussures

(30) Priorität: 11.12.1993 DE 4342839
(43) Veröffentlichungstag der Anmeldung: 28.06.1995
(73) Patentinhaber: KUNSTSTOFFTECHNIK F.U.H. RIESSELMANN GmbH, 01455 Ottendorf-Okrilla (DE)
(72) Erfinder: Petrick, Dieter, Ing., D-02763 Zittau (DE); Müller, Roland, Dipl.-Ing., D-01458 Ottendorf-Okrilla (DE); Möhn, Rainer, Dipl.-Ing., D-01458 Ottendorf-Okrilla (DE); Schirmacher, Heiko, Dr.-Ing., D-01309 Dresden (DE)
(74) Vertreter: Tragsdorf, Bodo, Dipl.-Ing.

(56) Entgegenhaltungen:
- DE-B- 1 071 575
- FR-A- 1 461 895
- FR-A- 2 645 504
- GB-A- 142 565

## Beschreibung

Die Erfindung betrifft ein Verpackungsbehältnis, insbesondere zum Verpacken, Transportieren und zum Lagern bzw. Stapeln von Schuhen, und ein Verfahren zu dessen Herstellung.

Die in der Praxis zum Einsatz kommende Schuhverpackung ist der zweiteilige Schuhkarton, bestehend aus Schachtel und Stülpdeckel. Der Nachteil dieser Verpackung besteht vor allem darin, daß es sich um eine Einwegverpackung handelt, die entweder vom Verkäufer oder vom Käufer der Schuhe entsorgt werden muß. Die Entsorgung ist mit einem erheblichen Aufwand verbunden. Bekannt sind bereits auch Mehrwegverpackungen für Schuhe, wie z. B. stapelbare Behälter aus Kunststoff (WO 86/07576). Derartige Behältnisse sind relativ teuer und verursachen einen hohen Transportaufwand beim Rücktransport als Leergut zum Hersteller der Schuhe. In der Praxis konnte sich deshalb diese Verpackung als Mehrwegverpackung nicht durchsetzen. Bekannt ist auch eine Mehrwegverpackung für Schuhe, die als Faltschachtel ausgebildet ist (DE-OS 41 38 990). Um den an eine Mehrwegverpackung gestellten höheren Materialanforderungen gerecht zu werden, besteht diese Verpackung aus einem mehrlagigen Schichtaufbau. Im Bereich der Faltlinien besteht der Schichtaufbau aus einer inneren und äußeren flexiblen Schicht und außerhalb der Faltlinien befindet sich zwischen den beiden Schichten eine steife Einlage, die aus Pappe, Karton oder Kunststoff bestehen kann. Die innere und äußere Schicht kann aus Papier, elastischer Folie oder textilen Flachformstoffen bestehen. An allen Außenkanten des einteiligen Zuschnitts sind lösbare Verbindungselemente angeordnet. Diese Verpackung ist in ihrer Herstellung sehr aufwendig und damit kostspielig. Außerdem muß diese Verpackung vor dem Gebrauch zusammengebaut werden und nach dem Gebrauch wieder zerlegt werden. Dies ist mit einem erheblichen Arbeitsaufwand verbunden. Der Aufbau des Verpackungsbehältnisses ist derart, daß nur eine Stirnseite geöffnet werden kann, um das Verpackungsgut einzulegen bzw. zu entnehmen. Von Verkaufseinrichtungen und den Herstellern von Schuhen wird diese Variante nicht als vorteilhaft angesehen. Ein weiterer Nachteil dieser Verpackung ist deren aufwendige Entsorgung nach einem nicht mehr möglichen Gebrauch. Die Verpackung besteht aus verschiedenen Werkstoffen, die getrennt entsorgt werden müssen. Außerdem besteht bei Mehrwegverpackungen die Gefahr, daß Verschmutzungen auftreten und die Verpackungen in bestimmten Zeitabständen gereinigt werden müssen. Die o.g. Mehrwegverpackung ist dafür nur bedingt geeignet.
In der GB-A-142 565 ist ein zusammenlegbarer Behälter beschrieben, der aus Segeltuch oder ähnlichem Material besteht. Die vier gleichen Seitenwände sind durch einsteckbare Stäbe oder Leisten verstärkt. Der Boden ist schwenkbar ausgebildet und besteht aus einem stabilen Rahmen, der mit Segeltuch bespannt ist. Die Abdeckung besteht entweder aus einem Stülpdeckel oder aus an den Seitenwänden befestigten Klappen, die miteinander verschnürt werden können. Dieser Behälter ist in seiner Herstellung sehr aufwendig.
Aus der DE-A-10 71 575 ist ein kistenförmiger Verpackungsbehältnis nach dem Oberbegriff des Anspruchs 1 für Obst, Gemüse oder dgl. bekannt, der aus einem Rahmen, vier Säulen und vier oder acht Querstäben, von denen vier als Bodenleiste ausgebildet sein können, besteht. Die Querstäbe sind fest oder lösbar mit den in Form eines Rechteckes senkrecht angeordneten vier Säulen verbunden. Die Seitenwände und der Boden des Behälter sind durch eine Folienbespannung gebildet, wobei durch den entsprechend der zu bedeckenden Fläche zugeschnittenen Folienschlauch die Querstäbe gesteckt und dann montiert werden. Der Nachteil des Behälters besteht vor allem darin, daß dieser aus vielen verschiedenen Einzelteilen besteht, wodurch die Montage bzw. Demontage des Behälters relativ zeitaufwendig ist. Der Verpackungsbehälter ist nicht zusammenlegbar, sondern nur in seine Einzelteile demontierbar. Ein weiterer Nachteil ist die begrenzte Tragfähigkeit des Bodens, da dieser ausschließlich durch die gespannte Folie gebildet wird. An den angrenzenden Bereichen der jeweiligen gespannten Folienabschnitte besteht die Gefahr, daß zumindest kleinstückiges Transportgut herausfallen kann.
Ferner ist ein demontierbarer Behälter aus Kunststoff für Lebensmittel bekannt (FR-A-2645 504), der aus mehreren Einzelteilen besteht, die montiert und demontiert werden müssen. Die beiden schmalen Seitenwände des Behälters bestehen aus stabilen Kunststoffbauteilen und sind an ihrer unteren Seite mit zwei Profilelementen (Winkelprofilen) aus Kunststoff gelenkig verbunden. Der Boden und die beiden in Längsrichtung verlaufenden Seitenwände sowie die Abdeckung bestehen aus einer flexiblen Kunststoffschlauchfolie. Unmittelbar vor Beginn der Abdeckfläche sind die beiden Lagen der Schlauchfolie in Querrichtung miteinander verschweißt. Zwischen die beiden Lagen der Schlauchfolie werden zwei Kunststoffprofile geschoben, die an ihren beiden überstehenden Enden Einhängeöffnungen aufweisen, und die oberen Verbindungselemente bilden. Diese werden in an den schmalen Seitenwänden befindlichen Einhängeösen eingehängt, wodurch die Schlauchfolie um die beiden in Längsrichtung zeigenden unteren Profile gespannt wird und dadurch die Längsseitenwände und der Boden gebildet werden. Ein weiteres Einzelteil des Behälters bildet ein Einsatz aus gewelltem Karton, bestehend aus einem Bodenteil und zwei Seitenteilen für die schmalen Seitenwände. Während der Demontage des Behälters werden die beiden schmalen Seitenwände nach außen geklappt. Dieser Behälter besteht aus insgesamt fünf Einzelteilen, die bei einem Transport als Leergut demontiert werden müssen. Dies erfordert einen erheblichen Zeitaufwand für die Demontage und Montage.

Der Erfindung liegt die Aufgabe zugrunde, ein Verpackungsbehältnis, insbesondere für Schuhe, bestehend aus einem schachtelförmigen Aufnahmebehälter und einem Deckel, zu schaffen, das einfach und kostengünstig herstellbar ist und als Mehrwegverpackung geeignet ist und als Leergut nur einen geringen Platzbedarf erfordert, maschinell gewaschen werden kann und kostengünstig recyclfähig ist. Ferner soll ein kostengünstiges Herstellungsverfahren geschaffen werden.

Erfindungsgemäß wird die Aufgabe bei einem gattungsgemäßen Verpackungsbehältnis dadurch gelöst, daß die Öffnung des Behälters mit einem Deckel verschließbar ist, der Boden und der Deckel aus stabilem stoßfestem Material bestehen und aus einem plattenförmigen Bauteil oder aus einem rahmenartigen Bauteil mit einem Verstrebungsteil gebildet sind, und mindestens die vier Seitenwände als einteilige Einlage ausgebildet sind, die umlaufend mit dem Boden dauerhaft fest verbunden ist. An mindestens zwei einander gegenüberliegenden Seitenwänden sind an dem rahmenartigen Bauteil, das mit der oberen Kante der Seitenwände dauerhaft fest verbunden ist, schwenkbare Stützelemente angeordnet, derart, daß die Seitenwände gespannt werden und gegen seitliches Verschieben gesichert sind.
Entsprechend einer vorteilhaften Ausgestaltung der Erfindung weisen die Seitenwände in Bodenrichtung überstehende Ränder auf, die mit dem Boden fest verbunden sind. In Deckelrichtung weist eine Seitenwand einen überstehenden Rand auf, der mit dem Deckel fest verbunden ist. Bei dieser Variante sind die entsprechenden Verlängerungen der Seitenwände mit der Bodenplatte und dem Deckel verbunden. Eine andere Variante besteht darin, daß die Seitenwände mit einem Bodenteil aus flexiblem Material verbunden sind, und das Bodenteil mit dem Boden fest verbunden ist. Dabei kann auch eine der Seitenwände mit einem Deckelteil aus flexiblem Material verbunden sein und das Deckelteil ist mit dem Deckel fest verbunden. Vorteilhafterweise bestehen die Seitenwände, das Bodenteil und das Deckelteil aus einem Stück und aus dem gleichen Material. Die so gebildete Einlage aus synthetischem textilem Material wird vorgefertigt, wobei die Zuschnitteile entsprechend der Form des Behälters zusammengenäht oder verschweißt werden. Die vorgefertigte Einlage ist in ihrer Form und Gestaltung vergleichbar mit einem Innenfutter.

Für einen rationellen Herstellungsprozeß ist es vorteilhaft, wenn Boden, Deckel und die rahmenartigen Bauteile, aus Kunststoff bestehen. Sie lassen sich z.B. einfach im Spritzgießverfahren herstellen und können durch Kleben oder Schweißen mit der Einlage zu einem Behältnis verbunden werden. Bevorzugterweise besteht die Einlage aus einer reißfesten Kunststoffolie oder einem synthetischen textilen Material. Von großem Vorteil für eine spätere Wiederverwertung des Verpackungsbehältnisses ist es, wenn alle Bauteile nur aus einem Material besteht. Besonders geeignet ist dafür der Werkstoff Polypropylen. Die Seitenwände oder die einstückige Einlage können aus Polypropylengewebe hergestellt werden, wobei im Falle des Nähens der Zuschnitteile Polypropylenfäden verwendet werden. Alle übrigen Bauteile können im Spritzgießverfahren aus Polypropylen gefertigt werden. Ein solches Verpackungsbehältnis kann nach dem Verschleiß äußerst kostengünstig zu Granulat verarbeitet werden, das als Sekundärmaterial wieder eingesetzt werden kann.
Gemäß einer weiteren Ausgestaltungsvariante sind die Stützelemente als stabförmige Elemente ausgebildet und an den äußeren Eckbereichen der Seitenwände angeordnet. Die Stützelemente können auch als Klappen ausgebildet sein.
Entsprechend einer weiteren Ausführungsvariante kann der Deckel mit dem Aufnahmebehälter verbunden sein oder Aufnahmebehälter und Deckel bilden zwei getrennte Bauteile, wobei der Deckel dann als Stülpdeckel ausgebildet ist. Die Verbindung zwischen dem Aufnahmebehälter und dem Deckel kann entweder über eine Verlängerung einer Seitenwand erfolgen oder durch ein zusätzlich angebrachtes Scharnier. So z.B. kann das rahmenartige Bauteil an der oberen Kante der Seitenwände mit dem rahmenartigen Bauteil des Deckels über ein Filmscharnier aus Polypropylen verbunden sein. Die Stützelemente, die vorzugsweise an den beiden kurzen Seitenwänden angeordnet sind, sind entweder an einer Verlängerung der Seitenwände schwenkbar befestigt oder über ein Schamier mit dem rahmenartigen Bauteil an der oberen Kante der Seitenwände verbunden. Als Scharnier ist ein Filmscharnier aus Polypropylen besonders gut geeignet. Die Stützelemente sind nach innen und außen schwenkbar. Durch ein Schwenken der Stützelemente nach außen und Verriegeln mit dem rahmenartigen Bauteil des Bodens und dem rahmenartigen Bauteil an der oberen Kante der Seitenwände, werden die Seitenwände aus dem flexiblen Material gespannt und das Behältnis erlangt die erforderliche Steifigkeit. Die Diagonalen der Seitenwände wirken dabei als Zugstäbe und ein Verschieben des Behältnisses zwischen dem oberen und dem unteren Rahmenbauteil ist somit nicht mehr möglich. Soll das Verpackungsbehältnis als Leergut transportiert oder gelagert werden, so sind die Stützelemente zu entriegeln und nach innen zu klappen. Die flexiblen Seitenwände klappen ebenfalls nach innen und das rahmenartige Bauteil an der oberen Kanten der Seitenwände gelangt dabei in Berührungskontakt mit dem Rahmen des Bodens. Der Deckel wird geschlossen und kann mit dem unteren Rahmenteil des Bodens verrasten. Die Höhe des Deckels kann so bemessen sein, daß der untere Rahmen des Bodens im Deckel vollständig oder nur teilweise aufgenommen wird. Nach dem Zusammenklappen des Verpackungsbehältnisses verringert sich dessen Höhe auf ca. 1/5. Dadurch kann es als Leergut sehr platzsparend aufbewahrt und transportiert werden.
Eine besonders vorteilhafte und kostengünstige Herstellung des erfindungsgemäßen Verpackungsbehältnisses ist wie folgt möglich.
Zuerst wird die innere Einlage aus textilem Polypropylenmaterial gefertigt, z.B. durch Nähen oder Schweißen des entsprechenden Zuschnittes. Die einstückige Einlage, bestehend aus Bodenteil, Seitenwänden, Deckelteil und gegebenenfalls mit einer an der Innenseite befestigten Zwischenlage zum getrennten Einschlagen von linkem und rechtem Schuh beim Verpacken, wird auf einen Formenkern eines Spritzgießwerkzeuges aufgespannt. Die vorgefertigte aufgespannte Einlage entspricht bereits der zu bildenden Form des Verpackungsbehältnisses. Als Spritzgießwerkzeug kommt vorzugsweise ein Heißkanalwerkzeug zum Einsatz. Nach dem Schließen des Werkzeuges werden der Boden oder Boden und Deckel sowie die rahmenartigen Bauteile und die Stützelemente durch Aufspritzen eines thermoplastischen Kunststoffmaterials auf die entsprechenden Flächen des textilen Gewebes über eine oder mehrere Anspritzstellen in einem Spritzgießzyklus gebildet, wobei durch oberflächliches Anschmelzen des textilen Kunststoffmaterials und Eindringen der Schmelze des Spritzgießmaterials in die Poren des textilen Kunststoffmaterials eine feste Verbindung entsteht. Nach dem Abkühlvorgang wird das Verpackungsbehältnis in an sich bekannter Weise entformt. Es ist auch möglich, die eingangs beschriebene Variante, bei der das Verpackungsbehältnis nicht mit einer inneren Einlage ausgestattet ist, nach diesem Verfahren herzustellen. In diesem Fall besteht die Einlage nur aus den vier miteinander verbundenen Seitenwänden mit überstehenden Rändern, an die die entsprechenden Bauteile angespritzt werden. Der Aufnahmebehälter und der Deckel können als separate Bauteile auch in getrennten Spritzgießwerkzeugen hergestellt werden. Bevorzugterweise sollten die Einlage bzw. die Seitenwände aus Polypropylengewebe bestehen und als Spritzgießmasse Polypropylen verwendet werden.
Entsprechend dem hohen Bedarf an derartigen Verpackungsbehältnissen ist somit eine kostengünstige Herstellung möglich. Das Verpackungsbehältnis wird als Mehrwegverpackung den gestellten Anforderungen vollauf gerecht und kann für ca. 20 bis 30 Umläufe eingesetzt werden. Im Falle von auftretenden Verschmutzungen an dem Gewebe, kann das Verpackungsbehältnis problemlos gewaschen bzw. gereinigt werden. Bedingt durch ein vollständiges Recycling des gesamten Verpackungsbehältnisses ist dieses besonders umweltfreundlich. Das erfindungsgemäße Verpackungsbehältnis ist in seiner Verwendung nicht nur für Schuhe begrenzt. Es kann in verschiedenen Größen hergestellt werden und auch zum Verpacken, Lagern und Transportieren anderer Gegenstände bzw. Materialien eingesetzt werden. Das Verpackungsbehältnis ist stapelbar und bedingt durch die Seitenwände aus textilem Material auch atmungsaktiv. Für bestimmte Anwendungsfälle kann es zweckmäßig sein, wenn an dem Verpackungsbehältnis noch ein oder zwei Henkel angebracht werden.

Die Erfindung soll nachstehend am Beispiel eines Verpackungsbehältnisses für Schuhe erläutert werden. In der zugehörigen Zeichnung zeigen
- Fig. 1: die vorgefertigte Einlage in perspektivischer Darstellung im gespannten Zustand,
- Fig. 2: ein Verpackungsbehältnis für Schuhe in aufgeklapptem Zustand in perspektivischer Darstellung,
- Fig. 3: einen Ausschnitt eines Längsschnittes des Verpackungsbehältnisses in vergrößertem Maßstab mit eingerasteter Klappe,
- Fig. 4: das Verpackungsbehältnis gemäß Fig. 2 in zusammengeklapptem Zustand in perspektivischer Darstellung und
- Fig. 5: einen Ausschnitt aus dem Längsschnitt des Verpackungsbehältnisses in zusammengeklapptem Zustand,

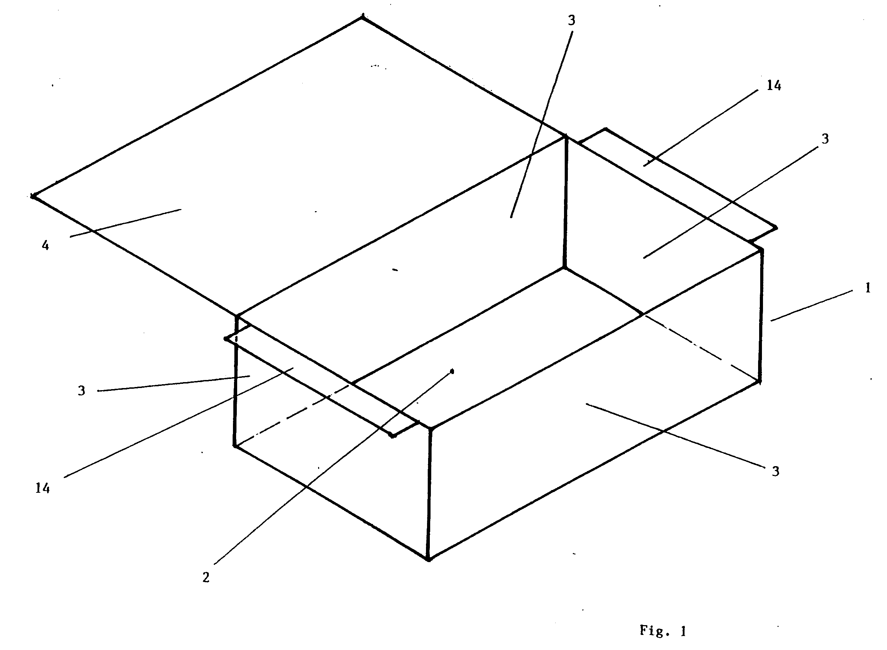

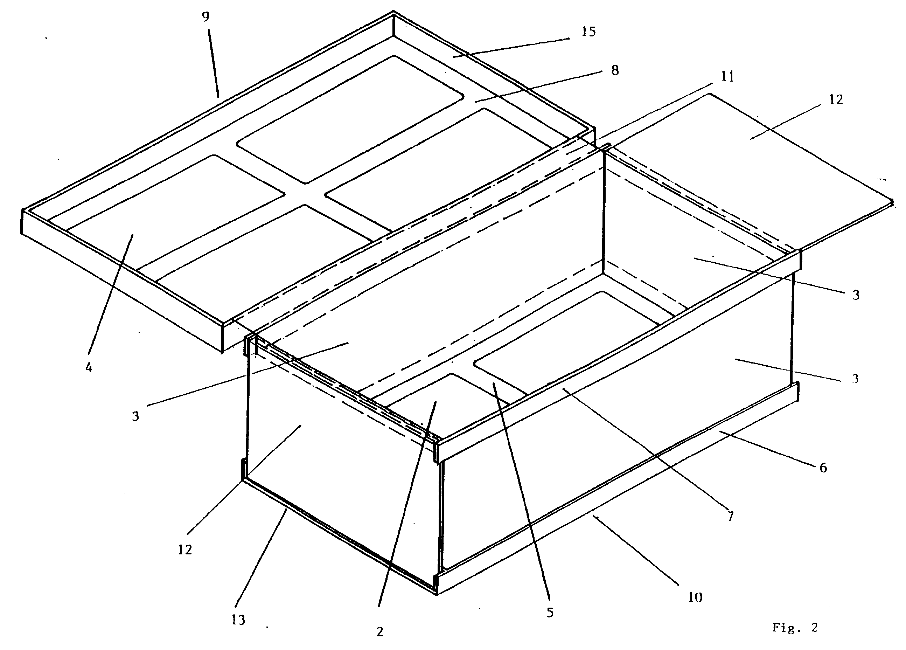

In der Figur 1 ist eine Einlage 1 aus flexiblem Material, einem Polypropylengewebe, dargestellt. Die Einlage 1 besteht aus einem Stück und hat einen Bodenteil 2, vier Seitenwände 3 und einen Deckelteil 4. Entsprechend dem Zuschnitt sind die einzelnen Teile mit Polypropylenfäden zusammengenäht. Die beiden kurzen Seitenwände sind mit Verlängerungen 14 versehen, an denen Seitenklappen befestigt werden. Die vorgefertige Einlage 1 ist infolge der instabilen, flexiblen Seitenwände 3 im Anlieferungszustand ein flaches Gebilde.

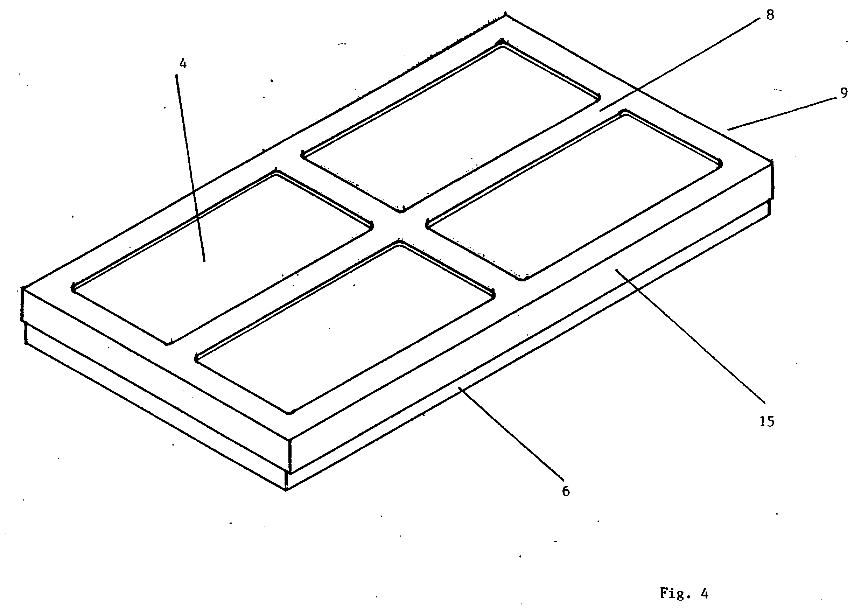

In der Figur 2 ist ein komplett fertiggestelltes Verpackungsbehältnis dargestellt. Der Bodenteil 2 der Einlage 1 ist dabei fest mit einem unteren Rahmen 5 verbunden. Der untere Rahmen 5 besitzt einen kreuzartigen Aufbau mit einer winkelförmigen Kante 6 an den beiden Längsseiten. Die Innenseiten der Längskanten 6 sind mit dem Gewebematerial der Einlage 1 ebenfalls fest verbunden. Die vier Seitenwände 3 des Verpackungsbehältnisses bestehen aus dem flexiblen Polypropylengewebe. An der oberen Kante der Seitenwände ist ein umlaufender schmaler Rahmen 7 befestigt, der wie der untere Rahmen bevorzugterweise aus Polypropylen besteht. An dem Deckelteil 4 der Einlage 1 ist ein kreuzartig ausgebildeter Rahmen 8 befestigt, um dem Deckel die erforderliche Stabilität zu verleihen. Der Rahmen 8 besitzt eine umlaufende rechtwinklige Kante 15, die nach dem Schließen des Deckels 9 den oberen Rahmen 7 umschließt. Der Deckel 9 ist demzufolge als Stülpdeckel ausgebildet. Der Boden 13 des Verpackungsbehältnisses wird wie in Fig. 2 gezeigt durch das Bodenteil 2 und den unteren Rahmen 5 mit den beiden Kanten 6 gebildet, wobei das Bodenteil 2 die Innenseite darstellt. Der Rahmen 5 ist mit seinen Berührungsflächen von unten mit dem Bodenteil verbunden. Der Aufbau des aus dem Deckelteil 4 und dem Rahmen 8 bestehenden Deckels ist analog. Während der Lagerung und des Transportes bilden die beiden Rahmen 5, 8 die obere und untere Begrenzung und nehmen etwaige Stoßbelastungen auf. Im Stapelverbund ist somit auch eine leichte Entnahme eines Verpackungsbehältnisses möglich.
In dem gezeigten Beispiel ist der Deckel 9 über den Deckelteil 4 der Einlage 1 mit dem Aufnahmebehälter 10 verbunden. Ein schmaler Streifen 11 des Deckelteils 4 bildet dabei das Scharnier. An den beiden kurzen Seiten des Aufnahmebehälters 10 sind schwenkbare Klappen 12 angeordnet. Die Klappen 12 sind jeweils an einer Verlängerung 14 der beiden Seitenwände aus textilem Material befestigt, ähnlich wie die zuvor beschriebene Befestigung des Rahmens 8 an dem Deckelteil 4. Ein schmaler Streifen der beiden Seitenteile aus dem Polypropylengewebe bildet dabei das Scharnier. Um die gewünschte Stabilität und Steifigkeit des Aufnahmebehälters 10 zu erreichen, werden die beiden Klappen 12, die aus einem stabilen Material, vorzugsweise Polypropylen, bestehen, nach außen geschwenkt bis sie am Rahmen 7 und am Rahmen 5 einrasten.

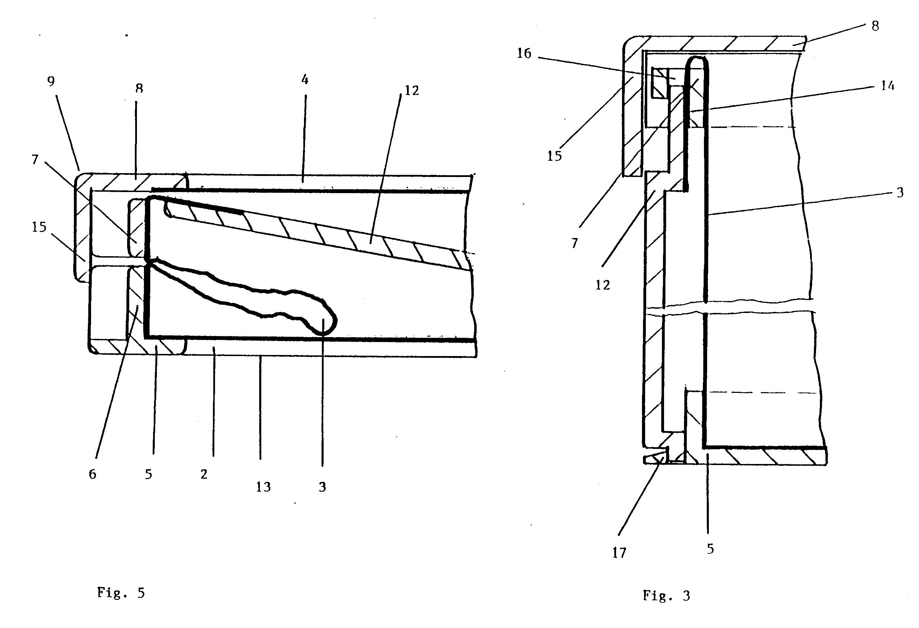

In der Fig. 2 sind die rechte Klappe 12 in geöffnetem Zustand und die linke Klappe 12 in eingerastetem Zustand dargestellt. Letztere ist in Fig. 3 in vergrößerter Darstellung gezeigt. Die an der Verlängerung 14 der Seitenwand 3 befestigte Klappe 12 weist an der unteren Seite eine kleinere Abwinklung auf und an der oberen Seite in Deckelhöhe ebenfalls eine Abwinklung. Die obere Abwinklung wird in eine an dem Rahmen 7 vorgesehene Hinterschneidung 16 eingeführt und der untere Teil der Klappe wird über eine am Rahmen 5 angebrachte schräg verlaufende Nase 17 eingerastet. Dadurch werden die flexiblen Seitenwände gespannt und der obere und untere Rahmen 5, 7 sind gegen ein seitliches Verschieben gesichert. Nach dem Einrasten der beiden Klappen 12 hat der Aufnahmebehälter 10 seine volle Stabilität erreicht. Das gesamte Verpackungsbehältnis weist durch die innere Einlage 1 aus dem synthetischen textilen Material ein optisch angenehmes Erscheinungsbild auf. Zum Verpacken der Schuhe kann noch eine Zwischenlage an der Innenseite der Einlage befestigt werden, um den rechten Schuh vom linken Schuh zu trennen. Die Einlage und die Rahmen können gleichfarbig oder verschiedenfarbig gestaltet sein. Das Verpackungsbehältnis ist stapelfähig und an den Außenseiten der Klappen 12 können die entsprechenden Kennzeichnungshinweise für die Schuhe angebracht werden.
In den Figuren 4 und 5 ist das Verpackungsbehältnis im eingeklappten Zustand dargestellt. Dabei ist der untere Rahmen 5, 6 des Bodens 13 teilweise im Deckel 9 aufgenommen. Zum Zusammenklappen des Verpackungsbehältnisses werden die beiden Seitenklappen 12 entriegelt und im geöffneten Zustand des Behältnisses nach innen geklappt. Danach legen sich beim Zusammenklappen die flexiblen Seitenwände 3 nach innen und der obere Rahmen 7 liegt auf der Kante 6 des unteren Rahmens 5 auf. Anschließend wird der Deckel 9 geschlossen, wobei dieser mit dem unteren Rahmen 5 verrasten kann. Das Verpackungsbehältnis hat dann, wie in Fig. 4 gezeigt, nur noch eine geringe Höhe und kann als Leergut platzsparend aufbewahrt bzw. transportiert werden.
Das Verpackungsbehältnis läßt sich kostengünstig herstellen. Vorteilhaft ist es, wenn alle Bauteile aus dem gleiche Material, einem thermoplastischen Kunststoff bestehen, wie z.B. Polypropylen. Da die gesamte Innenfläche des Verpackungsbehältnisses aus textilem Gewebe besteht, sind Beschädigungen an der Schuhoberfiäche beim Verpacken und während des Transportes ausgeschlossen.

Für die Herstellung des Verpackungsbehältnisses gibt es verschiedene Möglichkeiten. Die stabilen steifen Bauteile wie Rahmen und Klappen werden im Spritzgießverfahren aus thermoplastischem Kunststoff als Einzelteile hergestellt und anschließend mit der vorgefertigten Einlage durch Schweißen oder Kleben konfektioniert.
Eine andere Variante besteht darin, daß die stabilen Bauteile efindungsgemäß im Spritzgießverfahren mittels eines Heißkanalwerkzeuges direkt an die Einlage angespritzt werden.
Eine vereinfachte Variante des Verpackungsbehältnisses im Rahmen der Erfindung ist z.B. folgende. Der Boden und der Deckel werden ausschließlich durch je eine Kunststoffplatte gebildet, die mit Versteifungen und Durchbrüchen versehen sein kann. Die Seitenwände bestehen aus flexiblem textilem Material, deren Oberkante mit einem versteifend wirkenden Rahmen und deren untere Verlängerung mit dem Boden fest verbunden ist. An den kurzen Seiten des Rahmens sind Scharniere für die schwenkbaren Klappen befestigt, die mit dem Boden verrasten. Der Deckel kann mit dem Aufnahmebehälter über ein Scharnier verbunden sein oder als separater Stülpdeckel ausgebildet sein.
Auch hinsichtlich der Werkstoffe für die einzelnen Bauteile bieten sich verschiedene Möglichkeiten, wobei unter gegenwärtigen Bedingungen Kunststoff am besten geeignet ist. Da das Verpackungsbehältnis aus einem Werkstoff, wie z.B. Polypropylen hergestellt werden kann, ist nach dem Verschleiß des Verpackungsbehältnisses eine kostengünstige Wiederverwertung des Kunststoffmaterials möglich.

## Patentansprüche

1. Verpackungsbehältnis, insbesondere für Schuhe, bestehend aus einem Behälter (10) mit einem Boden (13) und vier Seitenwänden (3), die die Öffnung des Behälters (3) begrenzen, wobei die Seitenwände (3) aus einem flexiblen, zusammenfaltbaren Material bestehen und an ihrer oberen Kante mit einem rahmenartig versteifend wirkenden Bauteil (7) verbunden sind, und Stützelemente (12) vorgesehen sind, die mit dem rahmenartigen Bauteil (7) und dem Boden (13) formschlüssig verbindbar sind, dadurch gekennzeichnet, daß die Öffnung des Behälters (3) mit einem Deckel (9) verschließbar ist, der Boden (13) und der Deckel (9) aus stabilem stoßfestem Material bestehen und aus einem plattenförmigen Bauteil oder aus einem rahmenartigen Bauteil (5, 8) mit einem Verstrebungsteil gebildet sind, und mindestens die vier Seitenwände (3) als einteilige Einlage (1) ausgebildet sind, die umlaufend mit dem Boden (13) dauerhaft fest verbunden ist, und an mindestens zwei einander gegenüberliegenden Seitenwänden (3) an dem rahmenartigen Bauteil (7), das mit der oberen Kante der Seitenwände (3) dauerhaft fest verbunden ist, schwenkbare Stützelemente (12) angeordnet sind, derart, daß die Seitenwände (3) gespannt werden und gegen seitliches Verschieben gesichert sind.

2. Verpackungsbehältnis nach Anspruch 1, dadurch gekennzeichnet, daß die Seitenwände (3) in Bodenrichtung überstehende Ränder aufweisen, die mit dem Boden (13) fest verbunden sind.

3. Verpackungsbehältnis nach einem der Ansprüche 1 oder 2, dadurch gekennzeichnet, daß in Deckelrichtung eine Seitenwand (3) einen überstehenden Rand aufweist, der mit dem Deckel (9) fest verbunden ist.

4. Verpackungsbehältnis nach Anspruch 1, dadurch gekennzeichnet, daß die Seitenwände (3) mit einem Bodenteil (2) aus flexiblem Material verbunden sind, und das Bodenteil (2) mit dem den Boden bildenden flächenförmigen oder rahmenartigen Bauteil (5) fest verbunden ist.

5. Verpackungsbehältnis nach Anspruch 4, dadurch gekennzeichnet, daß eine der Seitenwände (3) mit einem Deckelteil (4) aus flexiblem Material verbunden ist und das Deckelteil (4) mit dem den Deckel bildenden flächenförmigen oder rahmenartigen Bauteil (8) fest verbunden ist.

6. Verpackungsbehältnis nach den Ansprüchen 4 und 5, dadurch gekennzeichnet, daß die Seitenwände (3), das Bodenteil (2) und das Deckelteil (4) aus dem gleichen Material und aus einem Stück bestehen.

7. Verpackungsbehältnis nach einem der Ansprüche 1 bis 6, dadurch gekennzeichnet, daß die flächenförmigen oder rahmenartigen Bauteile (5, 7, 8) und die Stützelemente (12) aus Kunststoff bestehen.

8. Verpackungsbehältnis nach einem der Ansprüche 1 bis 7, dadurch gekennzeichnet, daß die Seitenwände (3), das Deckelteil (4) und das Bodenteil (2) aus einer reißfesten Kunststoffolie oder einem synthetischen textilen Material bestehen.

9. Verpackungsbehältnis nach einem der Ansprüche 1 bis 8, dadurch gekennzeichnet, daß alle Bauteile (2, 3, 4, 5, 6, 7, 8, 11, 12) aus dem gleichen Kunststoffmaterial bestehen.

10. Verpackungsbehältnis nach einem der Ansprüche 1 bis 9, dadurch gekennzeichnet, daß die Stützelemente (12) als stabförmige Elemente ausgebildet sind und an den äußeren Eckbereichen der Seitenwände (3) angeordnet sind.

11. Verpackungsbehältnis nach einem der Ansprüche 1 bis 9, dadurch gekennzeichnet, daß die Stützelemente (12) als Klappen ausgebildet sind.

12. Verpackungsbehältnis nach einem der Ansprüche 1 bis 11, dadurch gekennzeichnet, daß der Aufnahmebehälter (10) und der Deckel (9) nicht miteinander verbunden sind und der Deckel (9) als Stülpdeckel ausgebildet ist.

13. Verpackungsbehältnis nach einem der Ansprüche 1 bis 11, dadurch gekennzeichnet, daß der Aufnahmebehälter (10) und der Deckel (9) miteinander verbunden sind.

14. Verpackungsbehältnis nach Anspruch 13, dadurch gekennzeichnet, daß die Verbindung zwischen dem Aufnahmebehälter (10) und dem Deckel (9) über eine Verlängerung (11) einer Seitenwand erfolgt.

15. Verpackungsbehältnis nach Anspruch 13, dadurch gekennzeichnet, daß das rahmenartige Bauteil (7) an der oberen Kante der Seitenwände (3) und der Deckel (9) über ein Scharnier miteinander verbunden sind.

16. Verpackungsbehältnis nach einem der Ansprüche 1 bis 15, dadurch gekennzeichnet, daß die Stützelemente (12) jeweils an einer Verlängerung (14) der Seitenwände (3) schwenkbar befestigt sind.

17. Verpackungsbehältnis nach einem der Ansprüche 1 bis 15, dadurch gekennzeichnet, daß die Stützelemente (12) über ein Scharnier mit dem rahmenartigen Bauteil (7) an der oberen Kante der Seitenwände (3) verbunden sind.

18. Verpackungsbehältnis nach einem der Ansprüche 1 bis 17, dadurch gekennzeichnet, daß an dem rahmenartigen Bauteil (7), das an der oberen Kante der Seitenwände (3) angeordnet ist, und dem Boden (5) Arretierungsmittel (16, 17) für die schwenkbaren Stützelemente (12) vorgesehen sind.

19. Verpackungsbehältnis nach einem der Ansprüche 1 bis 18, dadurch gekennzeichnet, daß die flächenförmigen oder rahmenartigen Bauteile (5, 6, 7, 8) und die Stützelemente (12) mit dem flexiblen Material (2, 3, 4) durch Kleben oder Schweißen verbunden sind.

20. Verpackungsbehältnis nach einem der Ansprüche 1 bis 8, dadurch gekennzeichnet, daß die rahmenartigen Bauteile (5,6,7,8) und die Stützelemente (12) im Spritzgießverfahren an das flexible Material (2, 3, 4) angespritzt sind.

21. Verpackungsbehältnis nach einem der Ansprüche 1 bis 20, dadurch gekennzeichnet, daß im eingeklappten Zustand, die Stützelemente (12) nach innen geschwenkt sind, die Seitenwände (3) nach innen gerichtet sind, der Rahmen (7) an den oberen Kanten der Seitenwände mit dem Rahmen des Bodens fast in Berührungskontakt steht und der Deckel (13) geschlossen ist.

22. Verpackungsbehältnis nach Anspruch 21, dadurch gekennzeichnet, daß der Deckel (13) und der Rahmen des Bodens (5, 6) ineinander einrastbar ausgebildet sind.

23. Verfahren zur Herstellung eines Verpackungsbehältnisses nach einem der vorangehenden Ansprüche, dadurch gekennzeichnet, daß
a) aus einem flexiblen textilen Kunststoffmaterial eine der Form des Verpackungsbehältnisses entsprechende Einlage (1) gebildet wird,
b) die Einlage (1) in ein geöffnetes Spritzgießwerkzeug eingelegt und arretiert wird,
c) nach dem Schließen des Werkzeuges der Boden (13) oder der Boden (13) und der Deckel (9) sowie die rahmenartigen Bauteile (7) und die Stützelemente (12) durch Aufspritzen eines thermoplastischen Kunststoffmaterials auf die entsprechenden Flächen des textilen Gewebes über eine oder mehrere Anspritzstellen in einem Spritzgießzyklus gebildet werden, wobei durch oberflächliches Anschmelzen des textilen Kunststoffmaterials und Eindringen der Schmelze des Spritzgießmaterials in die Poren des textilen Kunststoffmaterials eine feste Verbindung entsteht, und
d) nach dem Abkühlvorgang das Verpackungsbehältnis in an sich bekannter Weise entformt wird.

24. Verfahren nach Anspruch 23, dadurch gekennzeichnet, daß die vorgefertigte Einlage (1) aus vier Seitenwänden (3) mit überstehenden Rändern besteht, an die die stabilen Bauteile (7, 9, 13, 12) angespritzt werden.

25. Verfahren nach einem der Ansprüche 23 oder 24, dadurch gekennzeichnet, daß der Aufnahmebehälter (10) und der Deckel (9) in getrennten Spritzgießwerkzeugen hergestellt werden.

26. Verfahren nach einem der Ansprüche 23 bis 25, dadurch gekennzeichnet, daß die Einlage (1) aus Polyproylengewebe besteht und als Spritzgießmasse Polypropylen verwendet wird.

## Claims

1. Packaging particulary for shoes consisting of a container (10) with a bottom (13) and four side walls (3), that bound the opening of the container (3) in which the side walls (3) consist of a flexible, folded up material and are connected with a frame-sorted and strengthen-appeared component (7) and where are provided supporting elements (12) that are form-conclusively connectable with the framesorted component (7) and the bottom, characterized in that the opening of the container (3) is lockable by a cover, the bottom and the cover consist of a firm shock-proof material and are formed out of a flat-shaped component or out of a frame-sorted component (5, 8) with a support part, and at least the four side walls are formed as one-piece insole that is connected with the bottom (13) permanently firm and rounded and that is arranged at least at two each other opposited side walls (3) at the frame-sorted component (7) that is connected with the upper edge of the side walls (3) permanently firm swivelling support elements in such a way that the side walls (3) are strechted and are protected from lateral moving.

2. Packaging according to claim 1, characterized in that the side walls (3) show stood out edges in direction of the bottom. These edges are firmly connected with the bottom.

3. Packaging according to one of the claims 1 or 2, characterized in that in direction of the cover a side wall (3) shows a stood out edge that is firmly connected with the cover.

4. Packaging according to claim 1, characterized in that the side walls (3) are connected with the bottom part made of flexible material and that the bottom part is firmly connected with the surface-shaped or frame-sorted component (5) which forms the bottom.

5. Packaging according to claim 4, characterized in that one of the side walls (3) is connected with the cover part (4) made of flexible material and that the bottom part (2) is firmly connected with the surface-shaped or frame-sorted component (5) which forms the bottom.

6. Packaging according to claims 4 and 5, characterized in that the side walls (3), the bottom part (2) and the cover part (4) consist of the same material and of one piece.

7. Packaging according to one of the claims 1 to 6, characterized in that the surface-shaped or frame-sorted components (5, 7, 8) and the supporting elements (12) are made of plastic.

8. Packaging according to one of the claims 1 to 7, characterized in that the side walls (3), the cover part (4) and the bottom part (2) consist of a tensile strengthen plastic film or of a synthetic textile material.

9. Packaging according to one of the claims 1 to 8, characterized in that all components (2, 3, 4, 5, 6, 7, 8, 11, 12) consist of the same plastic.

10. Packaging according to one of the claims 1 to 9, characterized in that the supportingelements (12) are formed as rod-shaped elements and are arranged at the outer corner areas of the side walls (3).

11. Packaging according to one of the claims 1 to 9, characterized in that the supporting elements (12) are formed as flaps.

12. Packaging according to one of the claims 1 to 11, characterized in that the taking up container (10) and the cover (9) are not connected with each other and the cover (9) is formed as a top-cover.

13. Packaging according to one of the claims 1 to 11, characterized in that the taking up container (10) and the cover (9) are connected with each other.

14. Packaging according to claim 13, characterized in that the connection between taking up container (10) and the cover (9) is made by a lengthening of a side wall.

15. Packaging according to claim 13, characterized in that the frame-sorted component (7) at the upper edge of the side walls (3) and the cover (9) by a hinge are connected with each other.

16. Packaging according to one of the claims 1 to 15, characterized in that the supporting elements (12) are swivelling fastened of each of a lengthening (14) of the side walls (3).

17. Packaging according one of the claims 1 to 15, characterized in that the supportingelements (12) are connected by a hinge with the frame-sorted component (7) at the upper edge of the side walls (3).

18. Packaging according to one of the claims 1 to 17, characterized in that locking means (16, 17) for the swivelling supporting elements (12) are planned for the bottom and at the frame-sorted component (7) that is arranged at the upper edge of the side walls (3).

19. Packaging according to one of the claims 1 to 18, characterized in that the surface-shaped or frame-sorted components (5, 6, 7, 8) and the supporting elements (12) are connected with the flexible material (2, 3, 4) by sticking or welding.

20. Packaging according to one of the claims 1 to 8, characterized in that the frame-sorted components (5, 6, 7, 8) and the supporting elements (12) are sprayed at the flexible material by spray water method

21. Packaging according to one of the claims 1 to 20, characterized in that, in the foldedcondition, the supporting elements (12) are swung inside, the side walls (3) are turned inside, the frame (7) almost comes in contact with the frame of the bottom at the upper edges of the side walls and the cover (13) is closed.

22. Packaging according to claim 21, characterized in that the cover (13) and the frame of the bottom (5, 6) are formed engagable in each other.

23. Methods for the production of a packaging according to one of the preceded claims characterized in that
a) out of a flexible textile plastic material one of a form of the packaging appropriated insole (1) is formed
b) the insole (1) is put in and locked in an open spray water tool
c) after the closing of the tool the bottom (13) or the bottom and the cover (9) as well as the frame-sorted components (7) and the supporting elements (12) are formed by spraying a thermoplastic plastic material at the corresponding surfaces of the textile fabric over one or more spray places in one spray water cycle in which a firm compound arises by superficial melting of the textil plastic material and the penetrating of the melt in the pores of the textile plastic material and
d) after the process of cooling the packaging is formed out in the known way.

24. Method according to claim 23, characterized in that the prefabricated insole (1) consists of four side walls (3) with stood out edges, at that are sprayed the firm components (7, 9, 13, 12).

25. Method according to one of the claims 23 or 24, characterized in that the taking up container (10) and the cover (9) are produced in separated spray water tools.

26. Method according to one of the claims 23 or 25, characterized in that the insole (1) consists of polyproylen material and is used as spray water mass polypropylen.

## Revendications

1. Emballage, notamment pour des chaussures, se composant d'un récipient (10) muni d'un fond (13) et de quatre parois latérales (3) limitant l'ouverture du récipient (3), les parois latérales (3) se composant d'un matériau souple susceptible d'être replié et étant reliées à leur rebord supérieur à un élément de construction (7) ayant l'effet d'un cadre renforcé, et des éléments d'appui (12) susceptibles d'être reliés à l'élément de construction en cadre (7) et au fond (13) en formant une unique figure géométrique étant prévus, caractérisé par le fait que l'ouverture du récipient (3) est susceptible d'être fermée par un couvercle (9), que le fond (13) et le couvercle (9) se composent d'un matériau stable résistant aux chocs et qu'ils sont formés par un élément de construction en forme de plaque ou par un élément de construction en cadre (5, 8) muni d'un élément d'entretoise, et qu'au moins les quatre parois latérales (3) sont développées en garniture (1) en une seule pièce reliées tout autour du fond (13) de façon fixe et durable, et que des éléments d'appui (12) susceptibles de pivoter sont disposés à au moins deux des parois latérales opposées (3) situées à l'élément de construction en cadre (7) relié au rebord supérieur des parois latérales (3) de façon fixe et durable de façon à ce que les parois latérales (3) soient tendues et protégées contre un déplacement latéral.

2. Emballage selon la revendication 1, caractérisé par le fait que les parois latérales (3) présentent, en direction du fond, des bords saillants qui sont reliés au fond (13) de façon fixe.

3. Emballage selon l'une des revendications 1 ou 2, caractérisé par le fait qu'une paroi latérale présente, en direction du couvercle, un bord saillant qui est relié au couvercle (9) de façon fixe.

4. Emballage selon la revendication 1, caractérisé par le fait que les parois latérales (3) sont reliées à un élément du fond (2) se composant d'un matériau souple et que l'élément du fond (2) est relié de façon fixe à l'élément de construction en forme de surface formant le fond ou l'élément de construction en cadre (5).

5. Emballage selon la revendication 4, caractérisé par le fait que l'une des parois latérales (3) est reliée à un élément du couvercle (4) se composant d'un matériau souple et que l'élément du couvercle (4) est relié de façon fixe à l'élément de construction en forme de surface formant le couvercle ou l'élément de construction en cadre (8).

6. Emballage selon les revendications 4 et 5, caractérisé par le fait que les parois latérales (3), l'élément du fond (2) et l'élément du couvercle (4) se composent d'une seule pièce ainsi que du même matériau.

7. Emballage selon l'une des revendications 1 à 6, caractérisé par le fait que les éléments de construction en forme de surface ou en cadre (5, 7, 8) et les éléments d'appui (12) se composent de plastique.

8. Emballage selon l'une des revendications 1 à 7, caractérisé par le fait que les parois latérales (3), l'élément du couvercle (4) et l'élément du fond (2) se composent d'une feuille de plastique résistant au déchirement ou d'une matière textile synthétique.

9. Emballage selon l'une des revendications 1 à 8, caractérisé par le fait que tous les éléments de construction (2, 3, 4, 5, 6, 7, 8, 11, 12) se composent de la même matière plastique.

10. Emballage selon l'une des revendications 1 à 9, caractérisé par le fait que les éléments d'appui (12) sont développés en éléments en forme de tige et sont disposés aux domaines angulaires extérieurs des parois latérales (3).

11. Emballage selon l'une des revendications 1 à 9, caractérisé par le fait que les éléments d'appui (12) sont développés en rabats.

12. Emballage selon l'une des revendications 1 à 11, caractérisé par le fait que le contenant (10) et le couvercle (9) ne sont pas reliés l'un à l'autre et que le couvercle (9) est développé en couvercle cloche.

13. Emballage selon l'une des revendications 1 à 11, caractérisé par le fait que le contenant (10) et le couvercle (9) sont reliés l'un à l'autre.

14. Emballage selon la revendication 13, caractérisé par le fait que la connexion entre le contenant (10) et le couvercle (9) est assurée par un prolongement (11) de l'une des parois latérales.

15. Emballage selon la revendication 13, caractérisé par le fait que l'élément de construction en cadre (7) situé au rebord supérieur des parois latérales (3) et le couvercle (9) sont reliés par l'intermédiaire d'une charnière.

16. Emballage selon l'une des revendications 1 à 15, caractérisé par le fait que les éléments d'appui (12) sont fixés à chaque fois à un prolongement (14) des parois latérales (3) de façon susceptible de pivoter.

17. Emballage selon l'une des revendications 1 à 15, caractérisé par le fait que les éléments d'appui (12) sont reliés à l'élément de construction en cadre (7) situé au rebord supérieur des parois latérales (3) par l'intermédiaire d'une charniére.

18. Emballage selon l'une des revendications 1 à 17, caractérisé par le fait que des moyens de blocage (16, 17) pour les éléments d'appui (12) susceptibles de pivoter sont prévus à l'élément de construction en cadre (7) disposé au rebord supérieur des parois latérales (3) ainsi qu'au fond (5).

19. Emballage selon l'une des revendications 1 à 18, caractérisé par le fait que les éléments de construction en forme de surface ou en cadre (5, 6, 7, 8) et les éléments d'appui (12) sont reliés à un matériau souple (2, 3, 4) par collage ou par soudure.

20. Emballage selon l'une des revendication 1 à 8, caractérisé par le fait que les éléments de construction en cadre (5, 6, 7, 8) et les éléments d'appui (12) sont injectés sur le matériau souple (2, 3, 4) par le procédé de moulage par injection.

21. Emballage selon l'une des revendications 1 à 20, caractérisé par le fait que, lorsqu'il est replié, les éléments d'appui (12) sont pivotés vers l'intérieur, les parois latérales (3) sont dirigées vers l'intérieur, le cadre (7) situé aux rebords supérieurs des parois latérales est presque en contact avec le cadre du fond et le couvercle (13) est fermé.

22. Emballage selon la revendication 21, caractérisé par le fait que le couvercle (13) et le cadre du fond (5, 6) sont développés de façon susceptible de s'encastrer l'un dans l'autre.

23. Procédé de fabrication d'un emballage selon l'une des revendications précédentes, caractérisé par le fait que
a) une garniture (1) correspondant à la forme de l'emballage est formée d'une matière plastique textile souple,
b) la garniture (1) est insérée dans un moule pour coulage par injection ouvert et y est bloquée,
c) après la fermeture du moule, le fond (13) ou le fond (13) et le couvercle (9) ainsi que les éléments de construction en cadre (7) et les éléments d'appui (12) sont formés en appliquant une matière plastique thermoplastique sur les surfaces correspondantes du tissu textile à un ou plusieurs endroits d'application pendant un cycle de moulage par injection, une connexion fixe étant assurée lorsque la matière plastique textile fond à la surface et que la masse fondue de la matière du moulage par injection pénètre dans les pores de la matière plastique textile, et
d) l'emballage est déformé d'une façon connue en soi après le processus de refroidissement.

24. Procédé selon la revendication 23, caractérisé par le fait que la garniture préfabriquée (1) se compose de quatre parois latérales (3) munies de bords saillants sur lesquels sont injectés les éléments de construction stables (7, 9, 13, 12).

25. Procédé selon l'une des revendications 23 ou 24, caractérisé par le fait que le contenant (10) et le couvercle (9) sont fabriqués dans deux moules pour coulage par injection séparés.

26. Emballage selon l'une des revendications 23 à 25, caractérisé par le fait que la garniture (1) se compose de tissu de polypropylène et est utilisée en tant que masse de polypropylène pour moulage par injection.
